# EUROPÄISCHE PATENTANMELDUNG

(11) **EP 2 216 156 A1**
(43) Veröffentlichungstag der Anmeldung: **11.08.2010**
(21) Anmeldenummer: 09001610.6
(22) Anmeldetag: 05.02.2009
(51) Int. Cl.: B29C 44/34, B29C 44/46, B29C 44/60, B05C 5/02

(54) **Hochdruckvorrichtung**

(71) Anmelder: Bayer MaterialScience AG, 51368 Leverkusen (DE)
(72) Erfinder: Rüb, Thomas, 51375 Leverkusen (DE); Kuenzel, Uwe, 51377 Leverkusen (DE)

(57) **Zusammenfassung**

Die Erfindung betrifft eine Hochdruckvorrichtung zum gegebenenfalls gleichzeitigen und gegebenenfalls gleichmässigen Auftrag aufschäumender Schäume auf eine Oberfläche, ein Verfahren zur Herstellung aufschäumender Schäume, eine Vorrichtung zur Herstellung von Sandwich-Verbundelementen sowie ein Verfahren zur Herstellung von gesehäumten Sandwich-Verbundelementen. Im Detail umfasst die Hochdruckvorrichtung einen Mischkopf (11), einen strömungstechnisch hinter dem Mischkopf (11) liegenden Verteilerkopf (12), mindestens drei an den Verteilerkopf (12) angebrachte Austrittleitungen (17), eine Hochdruckzuleitung einer Komponente A zum Mischkopf (11), eine Hochdruckzuleitung einer Komponente B zum Mischkopf (11), mindestens einen Statikmischer (6) zur Durchmischung eines inerten Gases und der Komponente A, der Komponente 8 oder eines Gemisches der Komponenten A und B, mindestens eine Hochdruckzuleitung für das unter erhöhtem Druck stehende inerte Gas und mindestens eine Mess- und Regeleinheit (4) zur Einstellung der gewünschten Drücke der Komponenten am Mischkopf (11).

## Beschreibung

Die Erfindung betrifft eine Hochdruckvorrichtung zum gegebenenfalls gleichzeitigen und gegebenenfalls gleichmäßigen Auftrag aufschäumender Schäume auf eine Oberfläche, ein Verfahren zur Herstellung aufschäumender Schäume, eine Vorrichtung zur Herstellung von Sandwich-Verbundelementen sowie ein Verfahren zur Herstellung von geschäumten Sandwich-Verbundelementen.

Es besteht seit langem der Bedarf an Vorrichtungen für die kontinuierliche Herstellung von Sandwich-Verbundelementen bei denen man die Produktionsgeschwindigkeit auf Geschwindigkeiten von mehr als 60 m/min, insbesondere von mehr als 40 m/min, noch bevorzuger von mehr als 15 m/min, erhöhen kann.

Zur kontinuierlichen Herstellung von Sandwich-Verbundelementen sind bisher aus dem Stand der Technik oszillierende Mischköpfe bekannt. Hierbei führt der Mischkopf eine oszillierende Bewegung über die Breite einer unteren Deckschicht aus und trägt das noch flüssige Reaktionsgemisch mittels Gießharke oder Zungen-/Löffeldüse, die im rechten Winkel zum Mischkopf und parallel zu unteren Deckschicht angeordnet ist, auf die untere Deckschicht auf.

Der Mischkopf ist an einer Führungsschiene, dem so genannten Portal, über der unteren Deckschicht befestigt und wird mit Hilfe von Elektromotoren beschleunigt und vor den Umkehrpunkten abgebremst. Die Verschäumungs-Robstoffe werden dem Mischkopf über Schlauchleitungen zugeführt. Des Weiteren führen teilweise Hydraulik- oder Pneumatikschläuche zum Mischkopf. Die Verschäumungs-Rohstoffe werden über Düsen in den Mischkopf eingebracht und vermischt.

Das Reaktionsgemisch fließt danach in die Gießharke und tritt an den regelmäßig angebrachten Bohrungen aus. Durch die Länge der Gießharke und deren Bohrungen, sowie der oszillierenden Bewegung des Mischkopfs, wird eine gleichmäßige schräg zur Förderrichtung liegende Verteilung des Reaktionsgemisches erzielt.

Nach Aufbringung schäumt das Reaktionsgemisch auf und steigt bis zur oberen Deckschicht. Bei dem Aufschäumprozess verklebt es die beiden Deckschichten, bevor der Schaum erstarrt und aushärtet.

Dieses Produktionsverfahren ist fertigungstechnisch hinsichtlich der Produktionsgeschwindigkeit limitiert. Auch wenn ausreichend starke Motoren, Führungsschienen, Schläuche, Mischköpfe und Gießharken oder Zungen-/Löffeldüsen verwendet würden, würde das Reaktionsgemisch bedingt durch zu hohe Fliehkräfte an den Umkehrpunkten über die Seiten der Deckschichten hinausgetragen werden. Nach dem Stand der Technik können Produktionsgeschwindigkeiten von über 15 m/min bei der kontinuierlichen Herstellung von Sandwich-Verbundelementen mit dieser Auftragstechnik nicht erreicht werden.
Hinlänglich bekannt ist die Technik, mittels stehender Mischkopftechnologie und starren Austrittsystemen die Produktionsgeschwindigkeit auf 60 m/min zu erhöhen. Dieses Verfahren wird US-Technologie genannt. Diese US-Technologie (Schnellläufer) besteht im Wesentlichen aus drei gleichen Dosierlinien mit separater Zuführung und separaten Mischköpfen und Austrittsystemen. Diese Technologie verfügt jedoch nicht über einen Verteilerkopf. Dieses Verfahren hat weiterhin den Nachteil, dass das jeweils austretende Reaktionsgemisch aus den einzelnen Mischköpfen auch unterschiedlichen physikalischen Bedingungen bezüglich Druck und Temperatur unterliegen kann, was sich im jeweiligen erhaltenen Schaum durch Produktqualitätsminderungen wie beispielsweise ungleichmäßige Oberfläche, kleinere Zellen, unterschiedliche Wärmeleitfähigkeitswerte aufgrund punktuell unterschiedlicher Reaktionskinetik, bemerkbar macht.

EP 1 857 248 A2 löst dieses Problem dadurch, dass nicht jede Austrittleitung über einen separaten Mischkopf verfügt. Vielmehr ist nur ein Mischkopf vorgesehen, über den mehrere Austrittleitungen gespeist werden. Bei dem in EP 1 857 248 A2 beschriebenen System handelt es sich um bei für die Herstellung von PUR-Schäumen üblichen Drücken arbeitenden Vorrichtungen, bei denen einen Druck von 6 bar nicht überschritten wird; diese gestatten Produktionsgeschwindigkeiten von 15 bis maximal 60 m/min.

Im Hinblick auf diesen Stand der Technik bestand die Aufgabe der vorliegenden Erfindung darin, Vorrichtungen bzw. Verfahren zu entwickeln, mit welchen sich die Produktionsgeschwindigkeit weiter steigern lässt. Eine weitere Aufgabe lag darin, die Oberfläche (vor allen Dingen hinsichtlich ihrer Homogenität) der mit solchen Vorrichtungen/Verfahren erhältlichen Schaumstoffe ebenso zu verbessern wie die oben definierten Produktqualitäten.

Diese Aufgabe wird in einer ersten Ausfübrungsform gelöst durch eine Hochdruckvorrichtung zum Auftrag von aufschäumenden Schäumen umfassend einen Mischkopf, einen strömungstechnisch hinter dem Mischkopf liegenden Verteilerkopf, mindestens drei an den Verteilerkopf angebrachte Austrittleitungen, eine Hochdruckzuleitung einer Komponente A zum Mischkopf, eine Hochdruckzuleitung einer Komponente B zum Mischkopf, mindestens einen Statikmischer zur Durchmischung eines inerten Gases und der Komponente A, der Komponente B oder eines Gemisches der Komponenten A und B, mindestens eine Hochdruckzuleitung für das unter erhöhtem Druck stehende inerte Gas und mindestens eine Mess- und Regeleinheit zur Einstellung der gewünschten Drücke der Komponenten am Mischkopf.

Wenn der Verteilerkopf in diesem Zusammenhang als hinter dem Mischkopf liegend beschrieben wird, so ist dies in Bezug auf die Strömungsrichtung des diese beiden Köpfe durchströmenden Materials zu verstehen: Es wird also zunächst der Mischkopf und dann erst der Verteilerkopf durchströmt.

Vorteilhaft ist das inerte Gas ausgewählt aus der Gruppe von Luft, Stickstoff, Kohlendioxid und Edelgasen wie Argon und Helium. Bevorzugt wird Luft als chemisch inertes Gas eingesetzt.

Der oder die Statikmischer dienen dabei der innigen Vermischung der jeweiligen Komponente beziehungsweise des Gemisches mit dem unter erhöhtem Druck stehenden inerten Gas. Nach dem Eintrag des inerten Gases weisen die Komponenten auf ihrem Weg zum Misch-/Verteilerkopf beziehungsweise weist das Gemisch der Komponenten auf seinem Weg zum Verteilerkopf (denn hier erfolgt der Eintrag des inerten Gases entweder im Mischkopf oder zwischen Misch- und Verteilerkopf) einen erhöhten Druck auf, was eine erhöhte Austragsgeschwindigkeit des aufschäumenden Schaumes bedingt und dadurch eine erhöhte Produktionsgeschwindigkeit ermöglicht. Durch die Erhöhung der Austragsgeschwindigkeit wird zusätzlich eine gleichmäßigere Oberfläche bei dem herzustellenden Schaumstoff erreicht. Darüber hinaus werden die oben genannten Produktqualitäten verbessert.

Vorteilhaft ist es, wenn die Austrittleitungen der erfindungsgemäßen Hochdruckvorrichtung quer zur Ausströmrichtung des aufschäumenden Schaumes an einem starren Gestell befestigt sind. Diese Art der Befestigung ist einfach und die Fixierung ist ebenfalls reproduzierbar für unterschiedliche Paneltypen. Der Druck im Misch-/Verteilerkopf entspricht dabei nicht dem Druck, der durch bekannte Vorrichtungen des Standes der Technik erzielt wird.

Vorteilhaft ist es, wenn bei der erfindungsgemäßen Hochdruckvonichtung mindestens ein Statikmischer, insbesondere ein erster Statikmischer für die Komponente A und ein zweiter Statikmischer für die Komponente B, vor dem Mischkopf angeordnet ist/sind.

Durch eine solche Anordnung befinden sich beide Komponenten A und B bei Eintritt in den Mischkopf unter erhöhtem Druck, was eine innigere Vermischung beider Komponenten und damit eine homogener Ausbildung des Schaumstoffes zur Folge hat.

Vorteilhaft ist es, wenn bei der erfindungsgemäßen Hochdruckvorrichtung ein Statikmischer hinter dem Mischkopf angeordnet ist.

Bei dieser Verfahrensvariante wird also erst das Gemisch beider Komponenten A und B, und nicht etwa schon beide Komponenten allein, unter erhöhtem Druck gesetzt. Diese Verfahrensvariante stellt eine Kostenreduzierung dar, da die entsprechenden Bauteile wie Statikmischer, Mess- und Regeleinheit nur einmal benötigt werden.

Vorteilhaft ist es, wenn die Zuleitung für das inerte Gas bei der erfindungsgemäßen Hochdruckvorrichtung im Bereich des Statikmischers in den in den Statikmischer eintretenden Strom der Komponente A, der Komponente B und/oder des Gemisches der Komponenten A und B, mündet.

Dies bedingt eine gewisse Vorvermischung, die dann in direktem Anschluss durch den Statikmischer vervollständigt wird. Liegt der Ort des Eintrags des inerten Gases (räumlich) zu weit vom Statikmischer entfernt, besteht die Gefahr der Entmischung der Komponenten/des Gemisches und des inerten Gases auf dem Weg zum Statikmischer, welcher dieser nicht ausreichend auffangen könnte.

Vorteilhaft ist es, wenn bei der erfindungsgemäßen Hochdruckvorrichtung mindestens ein Statikmischer und mindestens eine Mess-/Regeleinhchtwig am Gestell befestigt sind.

Durch diese Anordnung kann die erfindungsgemäße Vorrichtung sehr platzsparend ausgelegt werden.
Vorteilhaft ist es, wenn die erfindungsgemäße Hochdruckvorrichtung einen Hochdruckkompressor zur Komprimierung des inerten Gases umfasst.

Dadurch brauchen zum Beispiel keine Metallgasflaschen mit vorkomprimierten inerten Gasen eingesetzt zu werden, was eine deutliche Kostenersparnis zur Folge hat.

Vorteilhaft ist es, wenn die erfindungsgemäße Hochdruckvorrichtung mindestens einen Wärmetauscher, insbesondere einen Hochdruckwärmetauscher, zur Einstellung der Temperatur der Komponente A und/oder der Komponente B umfasst. Die Druckbeaufschlagung allein würde die Komponente(n)/das Gemisch zu stark aufheizen.

Vorteilhaft ist es, wenn die erfindungsgemäße Hochdruckvorrichtung mindestens 4 am Verteilerkopf angebrachte, gleichlange und aus gleichem Material bestehende Austrittleitungen gleichen Querschnitts umfasst.

Vorteilhaft ist die erfindungsgemäße Hochdruckvorrichtung, wenn die Austrittleitungen der Panelgeometrie angepasst positioniert sind und das auslaufende Reaktionsgemisch über die gesamte Breite einer unteren Deckschicht gleichmässig verteilt wird.

In einer zweiten Ausführungsform wird die der Erfindung zugrunde liegende Aufgabe gelöst durch ein Verfahren zur Herstellung von aufschäumenden Schäumen durch Einsatz einer erfindungsgemäBen Hochdruckvorrichtung.

Vorzugsweise setzt man als Komponente B eine Isocyanat-Komponente ein. Als Komponente A setzt man bevorzugt eine Polyol-Komponente ein. In diesem Zusammenhang schließen die Begriffe "Isocyanat-Komponente" bzw. "Polyol-Komponente" auch Gemische verschiedener Isocynate bzw. Polyole mit ein.

Bevorzugt führt man das Verfahren so durch, dass man das inerte Gas vor der Einleitung in die Komponente A, die Komponente B und/oder das Gemisch der Komponenten A und B auf einen Druck von > 150 bar komprimiert. Das Gas muss dabei immer einen höheren Druck haben als die Komponente, in die es eingegeben wird. Ein Druckunterschied von 10 bar zwischen dem inerten Gas und den Komponenten ist jeweils ausreichend.

Bevorzugt befestigt man bei dem erfindungsgemäßen Verfahren die Austrittleitungen so an dem Gestell, dass die von dem ausströmenden aufschäumenden Schaum nicht benetzten Flächen einer zu bedeckenden Fläche gleich groß sind.

Bevorzugt befestigt man bei dem erfindungsgemäßen Verfahren die Austrittleitungen so an dem Gestell, dass der ausströmende aufschäumende Schaum nicht über die gesamte Breite einer zu bedeckenden Fläche gleichmäßig verteilt ist.

Bevorzugt befestigt man bei dem erfindungsgemäßen Verfahren die Austrittleitungen so an dem Gestell, dass der ausströmende aufschäumende Schaum in eine Förderrichtung eines Reaktionsbandes auf eine untere Deckschicht aufgetragen wird.

Bevorzugt befestigt man bei dem erfindungsgemäßcn Verfahren die Austrittleitungen so an dem Gestell, dass der ausströmende aufschäumenden Schaum gegen eine Förderrichtung eines Reaktionsbandes auf eine untere Deckschicht aufgetragen wird.

In einer dritten Ausführungsform wird die der Erfindung zugrunde liegende Aufgabe gelöst durch eine Vorrichtung zur Herstellung von Sandwich-Verbundelementen umfassend wenigstens zwei Zuführvorrichtungen für jeweils eine obere und eine untere Deckschicht, ein umlaufendes Oberband zur Führung der oberen Deckschicht und ein umlaufendes Unterband zur Führung der unteren Deckschicht, an die eine erfingsgemäße Hochdruckvorrichtung, eine Formstrecke und eine Ablängevorrichtung hintereinander angeordnet sind.

In einer vierten Ausführungsform wird die der Erfindung zugrundeliegende Aufgabe gelöst durch ein Verfahren zur Herstellung von geschäumten Sandwich-Verbundelementen, wobei man eine erfindungsgemäße Vorrichtung zur Herstellung von Sandwich-Verbundelementen einsetzt.

Bei der erfindungsgemäßen Hochdruckvorrichtung ist ebenfalls ein Mischkopf oberhalb der unteren Deckschicht an einem starren Gestell angebracht, so dass unterschiedliche Reaktionsprofile zur Herstellung von unterschiedlich dicken Produkten möglich sind. An den Mischkopf, in dem die einzelnen Verschäumungs-Komponeuten zusammen gemischt werden, ist ein Verteilerkopf befestigt. Dieser Verteilerkopf besitzt beispielsweise wenigstens 3, maximal 8 Austrittleitungen, deren Länge, Querschnitt und Material bevorzugt alle gleich sind. Dies hat den Vorteil, dass das Schaumverhalten des noch flüssigen Reaktionsgemisches beim Auftreffen auf die untere Deckschicht an jedem Auftreffpunkt gleich weit fortgeschritten ist, was zu einer besonders einheitlichen Verschäumung des hergestellten Produktes führt. Dieser Vorteil wird nicht nur durch die gleiche Länge, Querschnitt und Material der Austrittleitungen begünstigt, sondern auch dadurch, dass das gesamte aufzutragende Gemisch aus ein und demselben Mischkopf austritt. Als Austrittleitung kann jedes dem Fachmann bekannte Material genutzt werden, das nicht mit dem zu schäumendem Reaktionsgemisch reagiert und an dem das Reaktionsgemisch nicht unverhältnismässig stark haftet. Bevorzugt ist das Material der Austrittleitung ausgewählt aus der Gruppe von Stahl, Aluminium, Edelstahl, Polyethylen (PE), Polypropylen (PP), Polyvinylchlorid (PVC), Polyethylenterephthalat (PET), Kautschuk, Polytetrafluorethylen (PTFE) und Polyurethan (PU). Als Kautschuk ist jeder dem Fachmann bekannte in Zuleitungen verarbeitbare flexible Kautschuk zu verstehen, bevorzugt ist Nitril-Butadien-Kautschuk (NBR). Besonders bevorzugt ist ein biegsames Material ausgewählt aus der Gruppe von PE, PP, PET und PVC. Die Austrittleitungen sind an einem in Querrichtung zur Förderrichtung des Transportbandes über der oberen Deckschicht angeordneten, starren Gestell so angeordnet und fixiert, dass sie der Panelgeometrie angepasst sind und ein über die Breite der unteren Deckschicht gleichmäßiger Auftrag gewährleistet ist. Vorteilhaft sind die Austrittleitungen über der unteren Deckschicht angeordnet, dass das Reaktionsgemisch auf die untere Deckschicht aufgebracht wird, dass die nicht benetzten Bereiche zwischen den einzelnen Auftragsbereichen auf der unteren Deckschicht gleichgross sind. Während des Ausschäumens schliessen sich die Lücken, so dass ein gleichmäßiges Ausschäumen der Verbundelemente gewährleistet ist. Zur Feinjustierung sind die Austrittleitungen an dem starren Gestell in Querrichtung zur Förderrichtung des Transportbandes verschiebbar. Ebenfalls ist das starre Gestell auch höhenverschiebbar. Des Weiteren sind die Austrittleitungen an dem Gestell so angebracht, dass das Reaktionsgemisch entweder in oder gegen Förderrichtung des Transportbandes auf die untere Deckschicht auftrifft. Ob das Reaktionsgemisch in oder gegen die Förderrichtung des Transportbandes auf die untere Deckschicht auftritt, ist von der Austragsgeschwindigkeit aus den Austrittleitungen und von der Fördergeschwindigkeit des Transportbandes und gegebenenfalls von der Viskosität des Reaktionsgemisches abhängig. Bei einer Austragsgeschwindigkeit von 1,2 bis 2 m/min und einer Fördergeschwindigkeit von 20 bis 60 m/min ist es vorteilhaft, wenn der Auftrag des Reaktionsgemisches gegen die Förderrichtung erfolgt. Bei einer Austragsgeschwindigkeit von 1,2 bis 2 m/min und einer Fördergeschwindigkeit bis zu 20 m/min ist ein Auftrag in Förderrichtung des Transportbandes vorteilhaft.

Ein gegenläufiger Auftrag ist bevorzugt bei kleinen Austragsmengen und hohen Produktionsgeschwindigkeiten. Die Relativgeschwindigkeit des Gemisches zur Deckschicht ist bei gegenläufigem Auftrag höher und ergibt einen etwas breiteren Auftrag der einzelnen Stränge.

In einer besonderen Ausführung kann der Mischkopf als auch der Verteilerkopf samt der Austrittleitungen so angeordnet und fixiert werden, dass auch Produkte mit einer in Querrichtung zur Förderrichtung des Transportbandes abfallenden Dicke oder mit sich ständig ändernden Dickenverhältnissen hergestellt werden können, wobei die nicht benetzten Bereiche zwischen den einzelnen Auftragsbereichen auf der unteren Deckschicht linear abnehmend oder immer unterschiedlich gross sein können. Während des Ausschäumens schliessen sich diese Lücken, so dass ein in gewünschter Weise unregelmässiges Ausschäumen in der Höhe der Produkte ermöglicht wird.

Durch diese Art der Anordnung kann auf ein Portal wie es bei der oszillierenden Gießharke bzw. Zungen-/Löffeldüse zwingend notwendig ist, verzichtet werden. Des Weiteren sind mit dieser Anordnung die Produktionsgeschwindigkeiten nur noch von der Geschwindigkeit des Transportbandes oder der Austragsleistung der Verschäwnungsmaschine abhängig. Geschwindigkeiten von grösser 60 m/min können mit dieser Anordnung erreicht werden. Ein weiterer Vorteil dieser erfindungsgemäßen Vorrichtung gegenüber Verfahren, die mehrere Mischköpfe einsetzen müssen, ist der, dass durch die Verwendung von nur einem Mischkopf keine Schwankungen durch unterschiedliche Verarbeitungsdrücke, Temperaturen, oder ähnliches, wodurch die Produktionssicherheit und Produktqualität erniedrigt wird, auftreten können.

Als Mischkopf für die erfindungsgemäße Vorrichtung können alle im Stand der Technik bekannten Mischköpfe eingesetzt werden. Diese müssen jedoch zur Verschäumung insbesondere von Polyol-komponente und Isocyanatkomponente für die Herstellung von Polyurethan-Sandwich-Verbundelementen geeignet sein. Das chemisch inerte Gas kann dem Reaktionsgemisch im Mischkopf oder einer oder beiden Reaktionskomponenten bereits vorher zugemischt werden, um eine mögliche Verstopfung der Austrittleitungen zu verhindern. Das chemisch inerte Gas ist ausgewählt aus der Gruppe von Stickstoff, Luft, Kohlendioxid und Edelgasen wie Argon und Helium. Anstatt eines Gases können auch andere Bestandteile den Reaktionskomponenten hinzugemischt werden. Diese Stoffe sind beispielhaft ausgewählt aus der Gruppe von Graphit, Polyurethanmehl, Melanin, Quarzsand, Al₂O₃, Talkum und Nanokomposite wie beispielsweise Schichtsilicate, Nanotubes, Nanosand und werden den Reaktionskomponenten insbesondere im Mischkopf zugegeben.

Das Material des Verteilerkopfes kann ausgewählt sein aus Stahl, Edelstahl, Aluminium und Kunststoffen. In jedem Fall muss dass ausgewählte Material den im Mischkopf herrschenden Drücken und Temperaturen im Bereich von maximal 320 bar und 20 bis 40 °C standhalten.

Die Geometrie des Verteilerkopfes ist bevorzugt so gewählt, dass die Wegstrecke vom Eingang des Verteilers bis zu den jeweiligen Ausgängen zu den Austrittleitungen gleichlang ist. Des Weiteren ist es vorteilhaft, wenn der Querschnitt der Verteilerkopfausgänge bei allen Verteilerkopfausgängen identisch ist. Der Querschnitt des Verteilerkopfeingangs kann dagegen auch grösser sein als die jeweiligen Verteilerkopfausgänge.

Die erfindungsgemäße Auftragsvorrichtung kann Bestandteil einer weiteren Vorrichtung sein, die zur Herstellung von Sandwich-Verbundelementen eingesetzt wird. Die Herstellung von Polyurethan-Sandwichelementen (Panels) erfolgt im Allgemeinen in einem kontinuierlichen Prozess. Dabei werden die Panels endlos auf so genannten Doppel-Transportbändern in Dicken von in der Regel ca. 20 bis 240 mm hergestellt. Dicken von unter 20 mm und über 240 mm sind aber ebenfalls möglich. Ein solches Doppel-Transportband besteht dabei üblicherweise aus einem umlautenden Oberband zur Führung der oberen Deckschicht, einem umlaufenden Unterband zur Führung der unteren Deckschicht, einer Zuführeinrichtung für die obere Deckschicht, einer Zuführeinrichtung für die untere Deckschicht, einer Formstrecke, innerhalb derer das Polyurethan-Reaktionsgemisch zwischen der oberen Deckschicht und der unteren Deckschicht aufschäumt und ausreagiert, einer Ablängeinrichtung für das hergestellte Panel sowie einer Dosierstation mit einem Mischkopf zum Auftragen der Polyurethan-Reaktionsmischung auf die untere Deckschicht.

Die Anordnung der einzelnen Elemente für ein kontinuierliches Herstellungsverfahren für Sandwich-Verbundelemente ist aus dem Stand der Technik, wie in DE 1 247 612 A1 und DE 1 609 668 A1 beschrieben, bekannt.

Im Rahmen der vorliegenden Erfindung wird unter einem Sandwich-Verbundelement ein Verbundelement verstanden, welches wenigstens aus zwei Deckschichten und einer dazwischen liegenden Kernschicht aufgebaut ist.

Als Kernschicht können alle dem Fachmann bekannten Materialien eingesetzt werden. Bevorzugt sind Faserplatten aus Mineralfasern oder Platten aus Hartschaumstoff, wie beispielsweise Polyurethan- oder Polyisocyanurat (PIR)-Hartschaumstoff, Polystyrolschaumstoff, Phenolharzschaumstoff.

Im Besonderen bestehen Sandwich-Verbundelemente wenigstens aus zwei Deckschichten aus starren oder flexiblen Material und einer Kernschicht aus einem Schaumstoff wie beispielsweise einem PUR-Hartschaumstoff. Hierbei sind unter PUR Hartschaumstoffe solche Hartschaumstoffe zu verstehen, die auf Polyurethan-, Polyharnstoff- als auch Polyisocyanuratverbindungen basieren.

Als Kernschicht werden bevorzugt Hartschaumstoffe, auf Basis von Polyurethan und/oder Polyisocyanurat, gewählt. Zur Herstellung von Polyurethan- und/oder Polyisocyanuratgruppen aufweisenden Hartschaumstoffen können als Ausgangskomponenten alle dem Fachmann bekannten Verbindungen mit gegenüber OH-Verbindungen reaktiven NCO-haltigen Verbindungen wie a) aliphatischen, cycloaliphatischen, araliphatischen, aromatischen und heterocyclischen Polyisocyanate, bevorzugt Diphenylmethandiisocyanat (MDI) oder Polyphenylpolymethylenpolyisocyanate, Carbodiimidgruppen, Urethangruppen, Allophanatgruppen, Isocyanuratgruppen, Harnstoffgruppen oder Biuretgruppen aufweisende Polyisocyanate, besonders bevorzugt auf der Basis von Polyphenylpolymethylenpolyisocyanat und b) Verbindungen mit mindestens zwei gegenüber Isocyanaten reaktiven Wasserstaffatomen mit einem Molekulargewicht im Bereich von 400 bis 10.000 g/mol, wie beispielsweise Aminogruppen, Thiolgruppen, Hydroxylgruppen oder Carboxylgruppen aufweisende Verbindungen eingesetzt werden. Darüber hinaus ist die Verwendung von geeigneten NCO-Präpolymeren, hergestellt aus der Umsetzung von polymerem MDI mit aliphatischen oder aromatischen Polyetherpolyolen oder Polyesterpolyolen, beispielsweise 1 bis 4 Hydroxylgruppen aufweisenden Polyetherpolyolen oder Polyesterpolyolen mit einem zahlenmittleren Molekulargewicht von 60 bis 4000 möglich.

Die Herstellung der Schaumstoffe erfolgt unter Verwendung von üblichen, dem Fachmann bekannten Hilfs- und Zusatzstoffen wie Katalysatoren, Treibmitteln, Vernetzern, Flammschutzmitteln Schaumstabilisatoren, Fließverbesserern, Inhibitoren, sowie gegebenenfalls festen Additiven zur Verbesserung der Wärmeleitfähigkeit und des Flammschutzes.

Als Materialien für die Deckschichten können alle dem Fachmann bekannten Materialien eingesetzt werden. Bevorzugt sind Metalle wie Stahl (verzinkt und/oder lackiert), Aluminium (lackiert und/oder eloxiert), Kupfer, Edelstahl oder Nichtmetalle wie verstärkte, unverstärkte und/oder gefüllte Kunststoffe, wie beispielsweise Polyvinylchlorid oder auf Polyesterbasis oder Glasfasern, imprägnierte Pappe, Papier, Holz, Bitutnenglasvlies und mineralisches Glasvlies.

Beispielsweise können die Deckschichten mit einem Lack beschichtet sein.

Auch Kombinationen der Deckschichten auf den jeweiligen Seiten des hergestellten Panels aus den zuvor genannten Werkstoffen sind als Deckschichten geeignet.

Derartige Verbundelemente auf Basis von unterschiedlichen Deckschichten (starr oder flexibel) und einer Kernschicht aus Polyurethan-Hartschaumstoff sind aus dem Stand der Technik hinlänglich bekannt und werden auch als Metallverbundelemente oder Dämmplatte bezeichnet. Zwischen der Kernschicht und den Deckschichten können weitere Schichten vorgesehen sein.

Beispiele für die Anwendung solcher Verbundelemente mit starren Deckschichten sind ebene oder linierte Wandelemente sowie profilierte Dachelemente für den Industriehallenbau und Kühlhausbau. Auch finden die Verbundelemente als LKW-Aufbauten, Hallentüren und Tore sowie im Containerbau Einsatz. Dämmplatten sowie Verbundelemente mit flexiblen Deckschichten finden Einsatz als Dämmmaterialien von Dächern, Aussenwänden und als Fussbodenplatten.

Die Herstellung dieser Verbundelemente nach einem kontinuierlichen oder diskontinuierlichen Verfahren ist aus dem Stand der Technik hinlänglich bekannt. Hierfür wird das noch flüssige Reaktionsgemisch auf die untere Deckschicht mittels der erfindungsgemäßen Hochdruckvorrichtung aufgetragen. Das nun langsam aufschäumende Reaktionsgemisch wird auf der unteren Deckschicht mittels eines Unterbandes in die Formstrecke, die von einem Ober- und Unterband aufgespannt wird, transportiert. Das aufschäumende Reaktionsgemisch erreicht die obere Deckschicht und verklebt somit die beiden Deckschichten miteinander. Innerhalb der Formstrecke, wobei das Ober- und Unterband die Dicke des herzustellenden Produktes vorgibt, verfestigt sich der Schaum und wird nach Durchlauf durch die Formstrecke über eine Ablängvorrichtung, zum Schneiden der so hergestellten Panels in gewünschte Längen, abgelängt.

Nachfolgend wird die Erfindung anhand der beigefügten Zeichnungen näher erläutert.

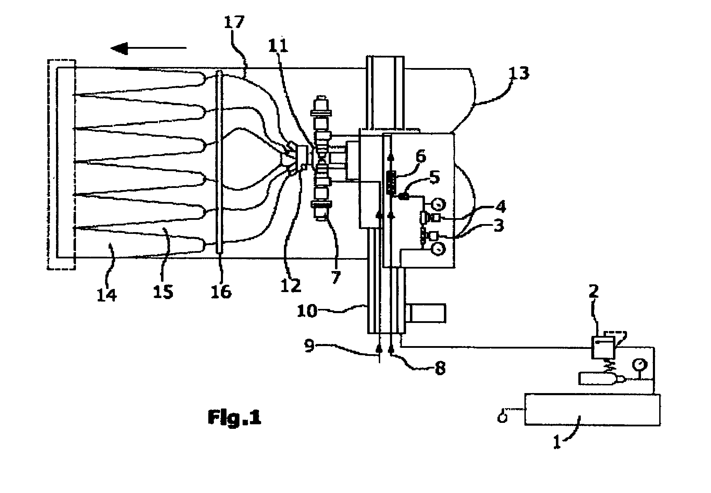

Fig. 1 zeigt eine erfindungsgemässe Auftragsvorrichtung während des Auftragens eines noch flüssigen Reaktionsgemisches 14 auf eine untere Deckschicht 13. Die Auftragsvorrichtung umfasst einen Mischkopf 11, der oberhalb der unteren Deckschicht 13 angeordnet ist. Die Produktdüsen 7 dienen dem Eintrag der durch die Produktleitungen 8 für das Polyol bzw. 9 für das Isocyanat zugeführten Komponenten in den Mischkopf 11. An den Mischkopf 11 schliesst sich ein Verteilerkopf 12 an, an dem sechs gleichlange und aus gleichem Material bestehende Austrittleitungen 17 gleichen Durchmessers befestigt sind. Die Austrittleitungen 17 sind so über die gesamte Breite der unteren Deckschicht 13 an der Unterseite des quer zur Förderrichtung verlaufenden Gestells 16 befestigt, dass ein gleichmässiger Auftrag auf die Deckschicht 13 in Förderrichtung des Transportbandes erfolgen kann. Das Gestell 16 ist starr über der unteren Deckschicht 13 angeordnet. Zur Feinjustage können die Austrittleitungen 17 ihre Position am Gestell 16 quer zur Förderrichtung verändern (nicht dargestellt). Über den Kompressor 1 wird das inerte Gas (zum Beispiel Luft) auf einen Druck von beispielsweise 180 bar komprimiert. Durch den Druckminderer 2 kann anschließend eine Regulierung auf einen geringeren Druck, beispielsweise 150 bar, erfolgen. In der dargestellten Ausführungsform sind die Mess-/Regeleinrichtung 4, das Auf-Zu-Ventil 3, das Rückschlagventil 5 und der Statikmischer 6 an dem zweiten Gestellbauteil 10 (auch Portal genannt) befestigt. Die in Fig. 1 dargestellte Ausführungsform sieht eine an die Panelgeometrie angepasste Anordnung der Austrittleitungen 17 an dem Gestell 16 vor, die es ermöglicht, dass das noch flüssige Reaktionsgemisch 14 so auf die untere Deckschicht 13 auftrifft, dass die nicht bedeckten Flächen 15 der unteren Deckschicht 13 zwischen den bedeckten Flächen gleich gross sind, um ein gleichmäßiges Aufschäumen über die gesamte Breite der Deckschicht 13 zu gewährleisten. Während des weiteren Aufschäumens des flüssigen Reaktionsgemisches 14 werden so die Lücken 15 gleichmässig geschlossen. In einer weiteren Ausführungsform können die Austrittleitungen 17 an dem Gestell 16 auch so angebracht sein, dass der Auftrag des Reaktionsgemisches auf die untere Deckschicht 13 gegen die Förderrichtung des Transportbandes erfolgen kann. In einer weiteren Ausführungsform können die Austrittleitungen 17 an dem Gestell 16 auch so angeordnet sein, dass sich die Dicke des jeweilig hergestellten Schaumstoffes quer zur Förderrichtung des Transportbandes verändert.

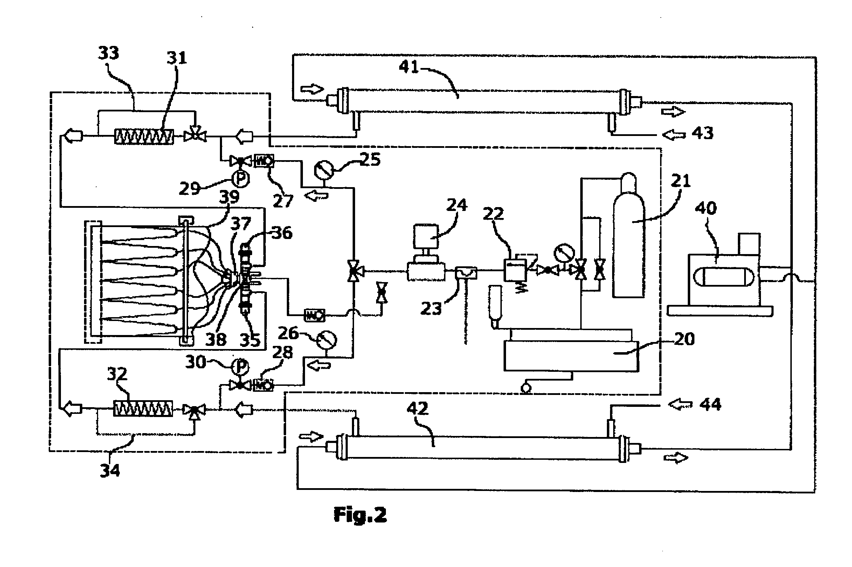

In Fig. 2 ist ein detaillierterer Plan einer Ausführungsform gemäß der vorliegenden Erfindung dargestellt. Die bei 43 bzw. 44 eintretenden Komponenten werden zunächst durch die Hochdruckwärmetauscher 41 bzw. 42 vorgekühlt. Neben den Hochdruckwärmetauschern 41 bzw. 42 gehört ebenfalls noch ein Kühlaggregat 40 zum Kühl(mittel)-kreislauf. Die beiden Komponenten treten dann in die Statikmischer 31 bzw. 32, welche jeweils mit Bypässen 33 bzw. 34 versehen sind, ein, um darin mit dem unter erhöhtem Druck stehenden inerten Gas vermischt zu werden. Über die Produktdüsen 35 bzw. 36 werden sie in den Mischkopf 38 eingebracht. Das resultierende Gemisch, das heißt der aufschäumende Schaum, durchströmt sodann den Verteilerkopf 37 und sechs Austrittöffungen, um auf die untere Deckschicht 39 aufgetragen zu werden. Das komprimierte inerte Gas wird entweder über den Kompressor 20 und/oder über die Gasflasche(n) 21 bereitgestellt. Der Druckminderer 22 vermindert den Druck wenn nötig auf für die Hochdruckvoriichtung annehmbare Werte herab. Für den Notfall ist eine Berstscheibe 23 vorgesehen, um eine Beschädigung der strömungstechnisch dahinter angebrachten Bauteile zu vermeiden. Über die Messeinheit 24, die Mannometer 25 und 26, die Rückschlagventile 27 und 28 sowie die Rückschlagventile 29 und 30 erfolgt schließlich eine Steuerung der Menge des inerten Gases, welche in den jeweiligen Komponentenstrom eingetragen wird.

## Patentansprüche

1. Hochdruckvorrichtung zum Auftrag von aufschäumenden Schäumen umfassend
einen Mischkopf,
einen strömungstechnisch hinter dem Mischkopf liegenden Verteilerkopf,
mindestens drei an den Verteilerkopf angebrachte Ausirittleitungen,
eine Hochdruckzuleitung einer Komponente A zum Mischkopf,
eine Hochdruckzuleitung einer Komponente B zum Mischkopf,
mindestens einen Statikmischer zur Durchmischung eines inerten Gases und der Komponente A, der Komponente B oder eines Gemisches der Komponenten A und B,
mindestens eine Hochdruckzuleitung für das unter erhöhtem Druck stehende inerte Gas
und mindestens eine Mess- und Regeleinheit zur Einstellung der gewünschten Drücke der Komponenten am Mischkopf.

2. Vorrichtung nach Anspruch 1, **dadurch gekennzeichnet, dass** die Austrittleitungen quer zur Ausströmrichtung des aufschäumenden Schaumes an einem starren Gestell befestigt sind.

3. Vorrichtung nach einem der Ansprüche 1 oder 2, **dadurch gekennzeichnet, dass** mindestens ein Statikmischer, insbesondere ein erster Statikmischer für die Komponente A und ein zweiter Statikmischer für die Komponente B, vor dem Mischkopf angeordnet ist/sind.

4. Vorrichtung nach einem der Ansprüche 1 bis 3, **dadurch gekennzeichnet, dass** ein Statikmischer hinter dem Mischkopf angeordnet ist.

5. Vorrichtung nach einem der Ansprüche 1 bis4, **dadurch gekennzeichnet, dass** die Zuleitung für das inerte Gas im Bereich des Statikmischers in den in den Statikmischer eintretenden Strom der Komponente A, der Komponente B und/oder des Gemisches der Komponenten A und B, mündet.

6. Verfahren zur Herstellung von aufschäumenden Schäumen durch Einsatz einer Vorrichtung nach einem der Ansprüche 1 bis 5.

7. Verfahren nach Anspruch 6, **dadurch gekennzeichnet, dass** man als Komponente A eine Isoeyanat-Komponente einsetzt.

8. Verfahren nach einem der Ansprüche 6 oder 7, **dadurch gekennzeichnet, dass** man als Komponente B eine Polyol-Komponente einsetzt.

9. Verfahren nach einem der Ansprüche 6 bis 8, **dadurch gekennzeichnet, dass** man das inerte Gas vor der Einleitung in die Komponente A, die Komponente B und/oder das Gemisch der Komponenten A und B auf einen Druck von > 150 bar komprimiert.

10. Verfahren nach einem der Ansprüche 6 bis 9, **dadurch gekennzeichnet, dass** man die Austrittleitungen so an dem Gestell befestigt, dass die von dem ausströmenden aufschäumenden Schaum nicht benetzten Flächen einer zu bedeckenden Fläche gleich groß sind.

11. Verfahren nach einem der Ansprüche 6 bis 9, **dadurch gekennzeichnet, dass** man die Austrittleitungen so an dem Gestell befestigt, dass der ausströmende aufschäumende Schaum nicht über die gesamte Breite einer zu bedeckenden Fläche gleichmäßig verteilt ist.

12. Verfahren nach einem der Ansprüche 6 bis 11, **dadurch gekennzeichnet, dass** man die Austrittleitungen so an dem Gestell befestigt, dass der ausströmende aufschäumende Schaum in eine Förderrichtung eines Reaktionsbandes auf eine untere Deckschicht aufgetragen wird.

13. Verfahren nach einem der Ansprüche 6 bis 11, **dadurch gekennzeichnet, dass** man die Austrittleitungen so an dem Gestell befestigt, dass der ausströmende aufschäumende Schaum gegen eine Förderrichtung eines Reaktionsbandes auf eine untere Deckschicht aufgetragen wird.

14. Vorrichtung zur Herstellung von Sandwich-Verbundelementen umfassend wenigstens zwei Zuführvorrichtungen für eine obere und eine untere Deckschicht, ein umlaufendes Oberband zur Führung der oberen Deckschicht und ein umlaufendes Unterband zur Führung der unteren Deckschicht, an die eine Nochdruckvorrichtung nach einem der Ansprüche 1 bis 5, eine Formstrecke und eine Ablängevorrichtung hintereinander angeordnet sind.

15. Verfahren zur Herstellung von geschäumten Sandwich-Verbundelementen, wobei man eine Vorrichtung nach Anspruch 14 einsetzt.
